(19) Europäisches Patentamt
European Patent Office
Office européen des brevets

(11) **EP 2 267 644 B1**

## (12) FASCICULE DE BREVET EUROPEEN

(45) Date de publication et mention
de la délivrance du brevet:
**09.09.2015 Bulletin 2015/37**

(21) Numéro de dépôt: **10160757.0**

(22) Date de dépôt: **22.04.2010**

(51) Int Cl.:
***G06K 19/07*** *(2006.01)*

(54) **Gestion d'énergie dans un transpondeur électromagnétique**

Energiesteuerung in einem elektromagnetischen Transponder

Power management in an electromagnetic transponder

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **19.06.2009 FR 0954149**

(43) Date de publication de la demande:
**29.12.2010 Bulletin 2010/52**

(73) Titulaire: **STMicroelectronics (Rousset) SAS
13790 Rousset (FR)**

(72) Inventeur: **Wuidart, Luc
83910 Pourrières (FR)**

(74) Mandataire: **de Beaumont, Michel
Cabinet Beaumont
1, rue Champollion
38000 Grenoble (FR)**

(56) Documents cités:
**EP-A1- 1 045 325          US-A1- 2005 001 609
US-A1- 2008 136 643      US-A1- 2008 204 206**

**Description**

<u>Domaine de l'invention</u>

La présente invention concerne de façon générale les systèmes électroniques et plus particulièrement, les systèmes utilisant des transpondeurs électromagnétiques, c'est-à-dire des émetteurs-récepteurs susceptibles d'être interrogés sans contact et sans fil par un terminal de lecture et/ou d'écriture.

<u>Exposé de l'art antérieur</u>

Les systèmes de communication basés sur une modulation d'un champ électromagnétique généré par un terminal sont multiples. Cela va de la simple étiquette électronique servant d'antivol à des systèmes plus complexes où un transpondeur, devant communiquer avec le terminal dans le champ duquel il se trouve, est équipé de fonctions de calcul (porte-monnaie électronique par exemple) ou de traitement d'information.

Les systèmes à transpondeurs électromagnétiques sont basés sur l'emploi de circuits oscillants comprenant un enroulement formant antenne, côté transpondeur et côté terminal. Ces circuits sont destinés à être couplés par champ magnétique proche lorsque le transpondeur entre dans le champ du terminal. Les circuits oscillants du terminal et du transpondeur sont généralement accordés sur une même fréquence correspondant à la fréquence d'excitation du circuit oscillant du terminal.

Dans la plupart des cas, les transpondeurs sont dépourvus d'alimentation autonome et extraient l'alimentation nécessaire aux circuits qu'ils comportent du champ haute fréquence rayonné par l'antenne du terminal.

La présente invention s'applique plus particulièrement aux transpondeurs équipés d'une unité de traitement susceptible d'effectuer des calculs, par exemple, sur requête d'un terminal dans le champ duquel le transpondeur se trouve. Ce type de transpondeur se rencontre notamment dès que des calculs cryptographiques doivent être mis en oeuvre, par exemple, pour authentifier ou chiffrer une transmission. Or, dans une position donnée par rapport à un terminal, un transpondeur ne peut aujourd'hui évaluer le courant maximal que ses circuits peuvent consommer.

Lorsqu'un transpondeur doit effectuer des calculs, il serait souhaitable de pouvoir savoir à l'avance si la tension qu'il récupère du champ rayonné par le terminal lui permet d'effectuer ces calculs. En particulier, il serait souhaitable qu'un transpondeur n'entame pas un calcul cryptographique qu'il ne pourra pas terminer. Cela peut également servir à gérer des priorités entre des traitements en fonction de l'énergie disponible.

Le transfert d'énergie entre le terminal et le transpondeur dépend du couplage entre le terminal et le transpondeur. Ce couplage, qui est inversement proportionnel (non linéaire) à la distance entre le terminal et le transpondeur, conditionne l'amplitude de la tension récupérée par le transpondeur.

Lorsqu'un transpondeur est dédié à un type de terminaux, on peut envisager de dimensionner les circuits pour optimiser le couplage. De plus, on peut envisager de déterminer, pour un calcul donné, la quantité d'énergie dont le transpondeur a besoin, donc la tension qu'il doit récupérer pour disposer de cette énergie. Mais, les systèmes à transpondeurs prévoient généralement qu'un transpondeur donné puisse être utilisé en coopération avec un grand nombre de terminaux qui possèdent des caractéristiques différentes.

Le document US-A-2005/001609 décrit un dispositif de détermination de l'état d'énergie d'un dispositif de stockage pour en déduire une information relative à l'énergie disponible.

Le document US-A-2008/0136643 décrit un dispositif de gestion de l'énergie dans une étiquette électronique passive ainsi qu'un procédé de gestion de cette énergie.

<u>Résumé</u>

Il serait souhaitable de pouvoir évaluer la capacité d'un transpondeur à effectuer des traitements selon l'énergie qu'il capte du champ rayonné par un terminal.

Il serait également souhaitable de pouvoir évaluer l'évolution de cette énergie disponible en cours d'une communication.

Il serait également souhaitable d'informer le terminal du type de requête qu'il peut envoyer au transpondeur pour exécution.

Il serait également souhaitable de pouvoir évaluer cette énergie disponible sans qu'il soit nécessaire d'effectuer un échange de données entre le terminal et le transpondeur.

Il serait également souhaitable de proposer une solution indépendante du type de terminal dans le champ duquel se trouve le transpondeur.

Pour atteindre tout ou partie de ces objets ainsi que d'autres, il est prévu un procédé d'évaluation tel que défini dans la revendication 1.

On prévoit également un procédé de gestion d'énergie d'un transpondeur électromagnétique tel que défini

EP 2 267 644 B1

dans la revendication 4.

On prévoit également un transpondeur électromagnétique tel que définis dans la revendication 9. Différents modes de réalisation sont définis dans les revendications dépendantes.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est une représentation très schématique d'un système à transpondeur du type auquel s'applique à titre d'exemple la présente invention ;

la figure 2 est un schéma bloc simplifié d'un terminal et d'un transpondeur d'un système de communication à transpondeur électromagnétique ;

la figure 3 illustre un exemple d'allure de la tension aux bornes du circuit oscillant du transpondeur en fonction du facteur de couplage ;

la figure 4 illustre des exemples d'allures de la tension aux bornes du circuit oscillant du transpondeur en fonction du facteur de couplage ;

la figure 5 est un schéma bloc fonctionnel illustrant un mode de mise en oeuvre du procédé d'évaluation et de gestion d'énergie ;

la figure 6 est un schéma-bloc fonctionnel illustrant une variante du procédé de la figure 5 ;

la figure 7 est un schéma-bloc fonctionnel illustrant une autre variante du procédé de la figure 5 ; et

la figure 8 est un schéma-bloc d'un mode de réalisation d'un transpondeur adapté à évaluer l'énergie dont il dispose.

Description détaillée

De mêmes éléments ont été désignés par de mêmes références aux différentes figures. Par souci de clarté, seuls les étapes et éléments utiles à la compréhension de l'invention ont été représentés et seront décrits. En particulier, les communications entre le transpondeur et le terminal n'ont pas été détaillées, l'invention étant compatible avec toute communication usuelle. De plus, les tâches susceptibles d'être exécutées par un transpondeur, suite à la détermination de l'énergie disponible, n'ont pas non plus été détaillées, l'invention étant, là encore, compatible avec toute tâche usuelle d'un transpondeur.

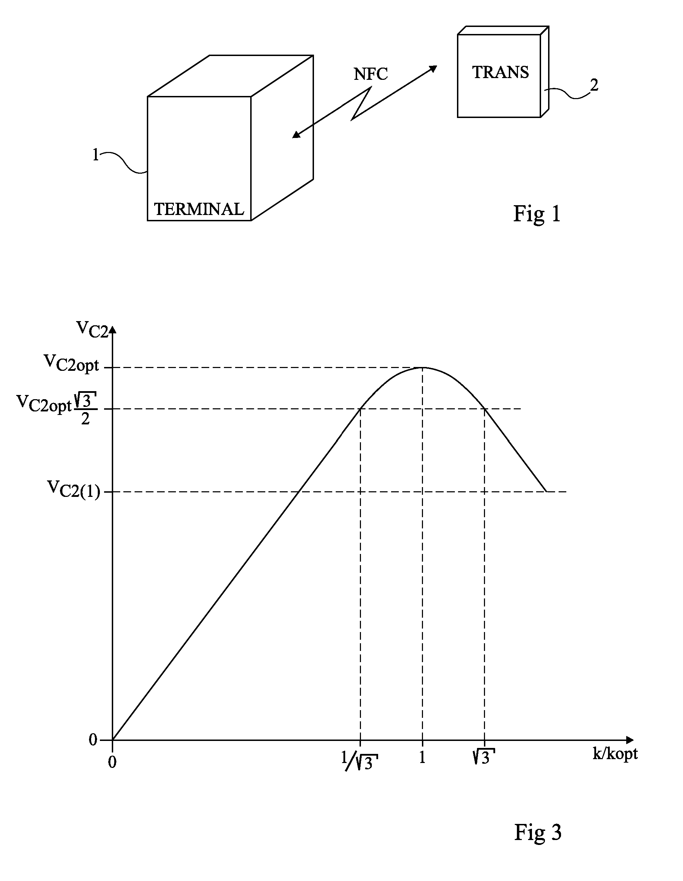

La figure 1 est un schéma bloc d'un système de communication à transpondeur électromagnétique. Un terminal 1 (TERMINAL) est susceptible de communiquer en champ proche (par exemple selon un protocole NFC - Near Field Communication) avec un élément distant, à savoir un transpondeur (TRANS).

Le terminal peut prendre différentes formes, par exemple, une borne de validation de titres de transport, un lecteur de passeports électroniques, un ordinateur portable, un dispositif mobile de communication (téléphone GSM, assistant numérique personnel - PDA, etc.), un boîtier électronique de démarrage d'un véhicule automobile, etc.

Le transpondeur peut de même prendre différentes formes, par exemple, une carte à puce, un titre de transport électronique, un passeport électronique, un terminal de télécommunication (téléphone GSM, PDA, etc.), une étiquette électronique, etc.

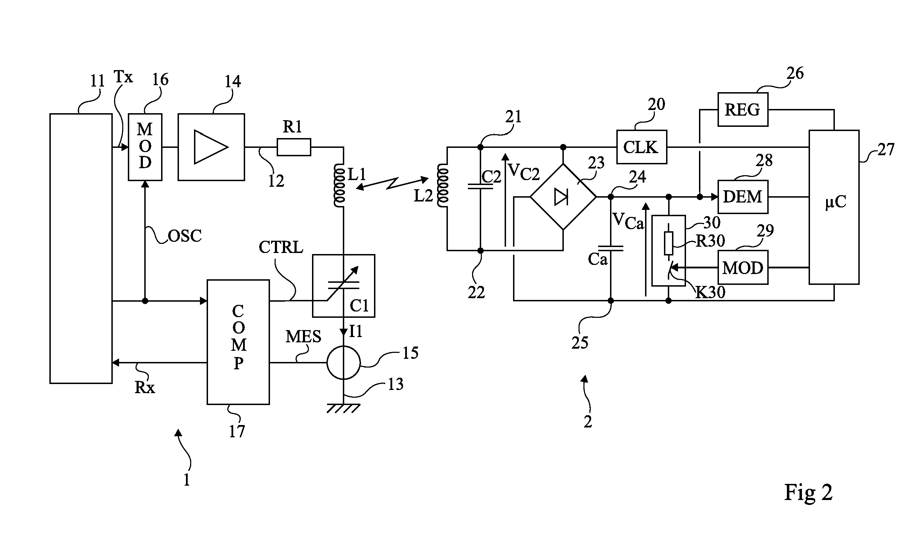

La figure 2 représente, de façon très schématique et simplifiée, un exemple de terminal 1 et de transpondeur 2.

Le terminal 1 comporte un circuit oscillant, généralement série, formé d'une inductance L1 en série avec un condensateur C1 et une résistance R1. Ce circuit oscillant série est, dans l'exemple de la figure 2, connecté entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite plus loin. L'amplificateur 14 reçoit un signal de transmission haute fréquence issu d'un modulateur 16 (MOD) qui reçoit une fréquence de référence (signal OSC) par exemple d'un oscillateur à quartz (non représenté). Le modulateur 16 reçoit si besoin un signal Tx provenant d'un circuit 11 de commande et d'exploitation des transmissions. Ce circuit 11 est généralement pourvu d'un microprocesseur de traitement de commandes et des données, communiquant avec différents circuits d'entrée/sortie (clavier, écran, élément d'échange avec un serveur, etc.) et/ou de traitement non détaillés. Les éléments du terminal 1 tirent le plus souvent l'énergie nécessaire à leur fonctionnement d'un circuit d'alimentation (non représenté) raccordé, par exemple, au réseau de distribution électrique (secteur) ou à une batterie (par exemple, celle d'un véhicule automobile ou d'un téléphone ou ordinateur portable). Le modulateur 16 fournit une porteuse haute fréquence (par exemple, à 13,56 MHZ) au circuit oscillant série L1-C1 qui engendre un champ magnétique.

L'élément capacitif C1 est, par exemple, un élément à capacité variable et commandable par un signal CTRL. Cet élément participe à la régulation de phase du courant I1 dans l'antenne L1 par rapport à un signal de référence. Cette régulation est une régulation du signal haute fréquence, c'est-à-dire du signal de la porteuse correspondant au

3

signal fourni à l'amplificateur 14 en l'absence de données Tx à transmettre. La régulation est effectuée en faisant varier la capacité C1 du circuit oscillant du terminal de façon à maintenir le courant dans l'antenne en relation de phase constante avec un signal de référence. Ce signal de référence correspond, par exemple, au signal OSC fourni au modulateur 14. Le signal CTRL est issu d'un circuit 17 (COMP) dont le rôle est de détecter l'écart de phase par rapport au signal de référence et de modifier en conséquence la capacité de l'élément C1. Le comparateur reçoit une information MES sur le courant I1 dans le circuit oscillant détecté par l'élément de mesure 15 (par exemple, un transformateur d'intensité ou une résistance).

Un transpondeur 2, apte à coopérer avec le terminal 1, comporte un circuit oscillant, par exemple parallèle, formé d'une inductance L2 en parallèle avec un condensateur C2 entre deux bornes 21 et 22. Le circuit oscillant parallèle (appelé circuit résonant en réception) est destiné à capter le champ magnétique engendré par le circuit oscillant L1-C1 du terminal 1. Les circuits L2-C2 et L1-C1 sont accordés sur une même fréquence de résonance (par exemple 13,56 MHz). Les bornes 21 et 22 sont reliées à deux bornes d'entrée alternatives d'un pont redresseur 23 (le plus souvent double alternance). Les bornes de sortie redressée du pont 23 définissent respectivement une borne positive 24 et une borne de référence 25. Un condensateur Ca est connecté entre les bornes 24 et 25 de façon à lisser la tension redressée.

Quand le transpondeur 2 se trouve dans le champ du terminal 1, une tension haute fréquence est engendrée aux bornes du circuit résonant L2-C2. Cette tension, redressée par le pont 23 et lissée par le condensateur Ca, fournit une tension d'alimentation à des circuits électroniques du transpondeur par l'intermédiaire d'un régulateur de tension 26 (REG). Ces circuits comprennent généralement une unité de traitement 27 (par exemple un microcontrôleur $\mu$C) associée à une mémoire (non représentée), un démodulateur 28 (DEM) des signaux éventuellement reçus du terminal 1, et un modulateur 29 (MOD) pour transmettre des informations au terminal. Le transpondeur est généralement synchronisé au moyen d'une horloge (CLK) extraite, par un bloc 20, du signal haute fréquence récupéré, avant redressement, sur une des bornes 21 ou 22. Le plus souvent, tous les circuits électroniques du transpondeur 2 sont intégrés dans une même puce.

Pour transmettre des données du terminal 1 vers le transpondeur, le circuit 16 module (généralement en amplitude) la porteuse (signal OSC) en fonction du signal Tx. Côté transpondeur 2, ces données sont démodulées par le démodulateur 28 à partir de la tension $V_{Ca}$. Le cas échéant, le démodulateur prélève le signal à démoduler en amont du pont de redressement.

Pour transmettre des données du transpondeur 2 vers le terminal 1, le modulateur 29 commande un étage de modulation 30 (rétromodulation) de la charge constituée par les circuits du transpondeur sur le champ magnétique produit par le terminal. Cet étage est généralement constitué d'un interrupteur électronique K30 (par exemple, un transistor) et d'une résistance R30 (ou d'une capacité), en série entre les bornes 24 et 25. L'interrupteur K30 est commandé à une fréquence (par exemple, 847,5 kHz) dite de sous-porteuse, nettement inférieure (généralement avec un rapport d'au moins 10) à la fréquence du signal d'excitation du circuit oscillant du terminal 1. Lorsque l'interrupteur K30 est fermé, le circuit oscillant du transpondeur est soumis à un amortissement supplémentaire par rapport à la charge constituée par les circuits 20, 26, 27, 28, et 29 de sorte que le transpondeur prélève une quantité d'énergie plus importante du champ magnétique haute fréquence. Côté terminal 1, l'amplificateur 14 maintient constante l'amplitude du signal d'excitation haute fréquence. Par conséquent, la variation d'énergie du transpondeur se traduit par une variation d'amplitude et de phase du courant dans l'antenne L1. Cette variation est détectée par un démodulateur d'amplitude ou de phase du terminal. Dans le mode de réalisation illustré en figure 2, le comparateur 17 intègre un démodulateur de phase servant également à démoduler le signal provenant du transpondeur. Par conséquent, ce comparateur 17 fournit un signal Rx restituant une rétromodulation éventuelle de données reçues d'un transpondeur au circuit 11. D'autres circuits de démodulation peuvent être prévus, par exemple un circuit exploitant une mesure de la tension aux bornes du condensateur C1.

De nombreuses variantes existent pour coder/décoder et moduler/démoduler les communications entre un transpondeur et un terminal.

Le temps de réponse de la boucle de régulation de phase est suffisamment long pour ne pas gêner la rétromodulation éventuelle provenant d'un transpondeur, et suffisamment courte devant la vitesse de passage d'un transpondeur dans le champ du terminal. On peut parler de régulation statique par rapport aux fréquences de modulation (par exemple, la fréquence de la porteuse de téléalimentation de 13,56 MHz et la fréquence de rétromodulation de 847,5 KHz utilisée pour transmettre des données du transpondeur vers la borne).

Un exemple de terminal à régulation de phase est décrit dans le document EP-A-0 857 981.

Le fait que la phase soit régulée côté terminal permet d'exploiter des mesures de courant et de tension dans le circuit oscillant du transpondeur pour en déduire des informations relatives au couplage du transpondeur lorsqu'il est dans le champ du terminal. Le coefficient de couplage entre le circuit oscillant du terminal et celui du transpondeur dépend essentiellement de la distance séparant le transpondeur du terminal. Le coefficient de couplage, noté k, est toujours compris entre 0 et 1. Il peut être défini par la formule :

$$k = \frac{M}{\sqrt{L1 \cdot L2}} ,$$ (formule 1)

dans laquelle M représente l'inductance mutuelle entre les inductances L1 et L2 des circuits oscillants du terminal et du transpondeur.

On définit un couplage optimum comme étant la position à laquelle la tension $V_{C2}$ aux bornes du circuit oscillant du transpondeur est maximale. Ce couplage optimum, noté $k_{opt}$, peut s'exprimer :

$$k_{opt} = \sqrt{\frac{L2}{L1} \cdot \frac{R1}{R2}} ,$$ (formule 2)

où R2 représente la résistance équivalente à la charge (load) constituée par les éléments du transpondeur sur son propre circuit oscillant. En d'autres termes, la résistance R2 représente la résistance équivalente de tous les circuits (microprocesseur, moyen de rétromodulation, etc.) du transpondeur 2, ramenée en parallèle sur le condensateur C2 et l'inductance L2 (avant ou après le pont redresseur). On appellera "charge résistive" la conductance apportée par les circuits du transpondeur, donc leur consommation. Le niveau de cette charge est symbolisé par la résistance R2 en parallèle aux bornes du circuit oscillant. Dans la formule 2 ci-dessus, on a négligé la résistance série de l'inductance L1 (antenne du terminal). On peut également considérer que la valeur de cette résistance série est, par simplification, incluse dans la valeur de la résistance R1.

La figure 3 représente un exemple d'allure de la tension $V_{C2}$ récupérée côté transpondeur en fonction du couplage normalisé $k/k_{opt}$ par rapport au couplage optimum. La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour le coefficient de couplage optimum $k_{opt}$ ($k/k_{opt} = 1$), puis décroît jusqu'à une valeur intermédiaire VC2(1) atteinte au couplage $k = 1$.

Comme l'illustre la figure 3, la tension $V_{C2}$ passe par deux points d'inflexion pour des valeurs de couplage correspondant à des rapports $k/k_{opt} = 1/\sqrt{3}$ et $k/k_{opt} = \sqrt{3}$ , pour lesquels la tension $V_{C2}$ prend la valeur

$$V_{C2opt} \cdot \frac{\sqrt{3}}{2} .$$

La tension $V_{C2}$ récupérée côté transpondeur conditionne l'énergie dont dispose ses circuits de traitement, donc l'énergie disponible pour ces circuits. On prévoit d'exploiter cette information.

On aurait pu penser stocker, côté transpondeur, une table de correspondance (par exemple, obtenue par apprentissage) entre la tension $V_{C2}$ et les traitements réalisables en fonction de la consommation qu'ils engendrent. Toutefois, une telle table ne serait valable que pour un couple de valeurs des résistances R1 et inductance L1, côté terminal, donc dédié à une famille de terminaux. Stoker, par apprentissage, des tables pour tous les terminaux rencontrés est en pratique inenvisageable pour des questions de volume mémoire.

Pour évaluer, côté transpondeur, son couplage avec le terminal, on exploite l'information de la tension $V_{C2}$ aux bornes de l'élément capacitif C2 de son circuit oscillant. Cette tension est donnée par la relation :

$$V_{C2} = \frac{I2}{\omega \cdot C_2} ,$$ (formule 3)

où I2 représente le courant dans le circuit oscillant du transpondeur, et où $\omega$ représente la pulsation du signal.

Le courant I2 est égal à :

$$I2 = \frac{M \cdot \omega \cdot I1}{Z2} ,$$ (formule 4)

où I1 représente le courant dans le circuit oscillant du terminal et où Z2 représente l'impédance du transpondeur.

L'impédance Z2 du transpondeur est donnée par la relation suivante :

$$Z2^2 = X2^2 + \left( \frac{L2}{R2.C2} \right)^2, \qquad \text{(formule 5)}$$

où X2 représente la partie imaginaire de l'impédance du circuit oscillant ( $X2 = \omega \cdot L2 - \dfrac{1}{\omega \cdot C2}$ ).

Par ailleurs, le courant I1 dans le circuit oscillant du terminal est donné par la relation :

$$I1 = \frac{Vg}{Z1_{app}}, \qquad \text{(formule 6)}$$

où Vg désigne une tension, dite de générateur, excitant le circuit oscillant du terminal, et où $Z1_{app}$ représente l'impédance apparente du circuit oscillant.

Le fait de réguler la phase du circuit oscillant du terminal permet que toutes les variations qui auraient tendance à modifier, de façon statique devant les fréquences de modulation, la partie imaginaire de la charge (load) constituée par le transpondeur, sont compensées par la boucle de régulation de phase. Ainsi, on s'assure qu'en fonctionnement statique la partie imaginaire de l'impédance $Z1_{app}$ est nulle. Par conséquent, cette impédance $Z1_{app}$ devient égale à la résistance apparente $R1_{app}$ (partie réelle de l'impédance) et peut s'exprimer sous la forme :

$$Z1_{app} = R1_{app} = R1 + \frac{k^2 \cdot \omega^2 \cdot L1 \cdot L2^2}{Z2^2 \cdot R2 \cdot C2}. \qquad \text{(formule 7)}$$

Comme les circuits oscillants sont accordés, on peut considérer que la partie imaginaire X2 de l'impédance Z2 est, en première approximation, proche de zéro. Il en découle que la valeur de l'impédance Z2 peut s'écrire :

$$Z2 = \frac{L2}{R2 \cdot C2}. \qquad \text{(formule 8)}$$

En reportant cette simplification dans les formules 4 et 7, et en reportant la formule 4 dans la formule 3, on obtient, pour la tension récupérée $V_{C2}$ aux bornes du circuit oscillant du transpondeur, la formule :

$$V_{C2} = k \cdot \sqrt{\frac{L1}{L2}} \cdot \frac{Vg}{\dfrac{R1}{R2} + k^2 \cdot \dfrac{L1}{L2}}. \qquad \text{(formule 9)}$$

On notera que la formule 9 n'est applicable qu'en considérant le circuit oscillant du transpondeur L2-C2 réglé à la fréquence d'accord, c'est-à-dire que $\omega \cdot \sqrt{L2 \cdot C2} = 1$.

En position de couplage optimum $k_{opt}$, la tension maximale $V_{C2opt}$ est donc donnée par la formule (en combinant les formules 2 et 9) :

$$V_{C2opt} = \frac{Vg}{2} \cdot \sqrt{\frac{R2}{R1}} \qquad \text{(formule 10)}$$

Il ressort de la formule 9 que, pour un terminal donné (valeurs de R1 et de L1 fixes) et pour une inductance L2 fixe (donc une valeur de C2 fixe), la tension ne dépend que du couplage k et de la charge résistive constituée par les circuits du transpondeur et ramenés en parallèle sur le circuit oscillant.

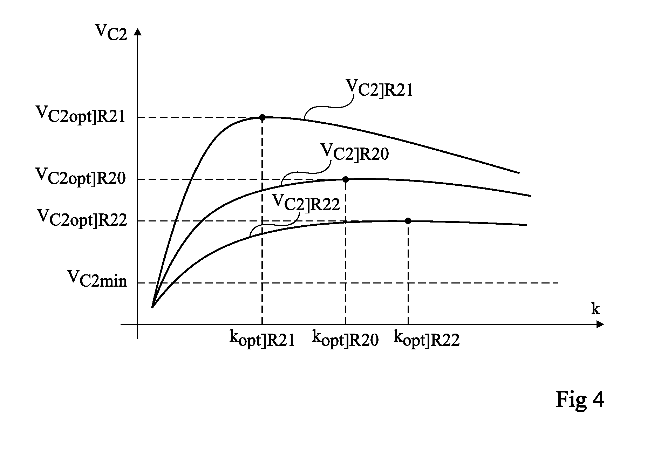

La figure 4 représente des exemples d'allures de la tension $V_{C2}$ en fonction du coefficient de couplage k pour plusieurs valeurs de résistance R2. On suppose des valeurs R22, R20 et R21 croissantes. Plus la valeur R22, R20, R21 de la résistance R2 est grande, plus la valeur $V_{C2]R22}$, $V_{C2]R20}$, $V_{C2]R21}$ de la tension $V_{C2}$ est importante pour un même couplage k donné. Par ailleurs, plus la valeur de la résistance R2 augmente, plus le couplage optimum $k_{opt]R22}$, $k_{opt]R20}$, $k_{opt]R21}$ est obtenu pour une valeur faible du couplage k.

Il existe une valeur minimale $V_{C2min}$ de la tension $V_{C2}$ en dessous de laquelle l'alimentation est insuffisante. Ce niveau peut être considéré comme le niveau de consommation (valeur de la charge résistive) maximal envisageable pour une position de couplage donnée. Diminuer la résistance R2 jusqu'à obtenir le niveau $V_{C2min}$ donne, pour une position donnée (couplage k) du transpondeur par rapport au terminal, indirectement le courant maximal que peuvent consommer les circuits du transpondeur.

En notant Vcc la tension d'alimentation régulée fournie aux circuits du transpondeur (notamment au microcontrôleur), cette tension peut s'exprimer :

$$\mathrm{Vcc = R2min.Ic_{max} = R20.Ic_{]R20},} \qquad \text{(formule 11)}$$

où $Ic_{max}$ et $Ic_{]R20}$ désignent les valeurs du courant Ic fourni par le régulateur 26, pour une résistance équivalente R2, respectivement minimale (valeur R2min) et de valeur R20.

En notant $\Delta V$ la chute de tension en amont du régulateur 26, la valeur minimale $V_{C2min}$ de la tension $V_{C2}$ peut s'exprimer :

$$\mathrm{V_{C2min} = Vcc + \Delta V.} \qquad \text{(formule 12)}$$

La seule information de la tension $V_{C2}$ courante ne suffit pas pour évaluer le couplage. En effet, il ressort de la figure 3, qu'une même valeur de la tension $V_{C2}$ peut correspondre à deux valeurs de couplage. Par conséquent, on prévoit d'évaluer le couplage courant par rapport au couplage optimum.

En combinant les formules 9 et 10 et en exprimant le couplage de façon normalisée par le couplage optimum $(k/k_{opt})$, on obtient l'expression suivante de la tension $V_{C2}$ :

$$V_{C2} = 2 \cdot V_{C2opt} \cdot \frac{\dfrac{k}{k_{opt}}}{1 + \left(\dfrac{k}{k_{opt}}\right)^2} \qquad \text{(formule 13)}$$

Pour une valeur de couplage k donnée, en considérant que l'impédance du circuit oscillant du terminal ne varie pas et que les circuits restent accordés, le rapport entre les coefficients courants k et les coefficients optimum $k_{opt]R20}$ et $k_{opt]R22}$, respectivement pour une résistance R2 de valeur R20 et de valeur R22 donne, d'après la formule 2, l'expression suivante :

$$\frac{\dfrac{k}{k_{opt]R20}}}{\dfrac{k}{k_{opt]R22}}} = \sqrt{\frac{R20}{R22}} \qquad \text{(formule 14)}$$

Toujours dans les même conditions, le rapport entre les valeurs $V_{C2]R22}$ et $V_{C2]R20}$ de la tension $V_{C2}$, respectivement pour les valeurs R22 et R20 de la résistance R2, donne la relation suivante :

$$\frac{V_{C2]R22}}{V_{C2]R20}} = \frac{\left(\dfrac{k}{k_{opt]R20}}\right)^2 + 1}{\left(\dfrac{k}{k_{opt]R20}}\right)^2 + \dfrac{R20}{R22}} \; . \qquad \text{(formule 15)}$$

La formule 15 peut également s'écrire (avec R22 inférieure à R20) :

$$\left(\frac{k}{k_{opt]R20}}\right)^2 = \frac{\dfrac{V_{C2]R22}}{V_{C2]R20}} \cdot \dfrac{R20}{R22} - 1}{1 - \dfrac{V_{C2]R22}}{V_{C2]R20}} \; . \qquad \text{(formule 16)}$$

Pour une valeur R21 supérieure à R20, la formule 16 donne :

$$\left(\frac{k}{k_{opt]R20}}\right)^2 = \frac{1 - \dfrac{V_{C2]R21}}{V_{C2]R20}} \cdot \dfrac{R20}{R21}}{\dfrac{V_{C2]R21}}{V_{C2]R20}} - 1} \; . \qquad \text{(formule 16 bis)}$$

Par ailleurs, appliquée aux valeurs R20 et R2min, la formule 15 donne la formule 17 ci-dessous :

$$\frac{R20}{R2min} = \frac{V_{C2]R20}}{V_{C2min}} \cdot \left[ \left(\frac{k}{k_{opt]R20}}\right)^2 + 1 \right] - \left(\frac{k}{k_{opt]R20}}\right)^2 \; .$$

En combinant les formules 11, 12 et 17, le courant maximal $Ic_{max}$ peut s'exprimer d'après la formule 18 ci-dessous :

$$Ic_{max} = Ic_{]R20} \cdot \left( \frac{V_{C2]R20}}{(Vcc + \Delta V)} \cdot \left[ \left(\frac{k}{k_{opt]R20}}\right)^2 + 1 \right] - \left(\frac{k}{k_{opt]R20}}\right)^2 \right) \; .$$

On prévoit, pour un couplage donné (avec une valeur R20 de résistance R2), d'évaluer la consommation maximale (le courant $Ic_{max}$) envisageable d'après la formule 18.

Il ressort de la formule 16bis qu'en augmentant la valeur de la résistance R2, d'une première valeur R20 vers une seconde valeur R21 supérieure (ce qui revient à diminuer le courant prélevé par les circuits du transpondeur sur le circuit oscillant L2-C2), on peut déterminer le rapport $k/k_{opt]R20}$ (déterminer le carré de ce rapport suffit pour appliquer la formule 18).

En pratique, on ne mesure pas directement la tension aux bornes du circuit oscillant, mais la tension lissée aux bornes du condensateur $V_{Ca}$ en sortie du pont redresseur 23. Cette tension $V_{Ca}$ est proportionnelle à la tension $V_{C2}$. Comme on évalue des rapports de tension, il n'est pas nécessaire de connaître le coefficient de proportionnalité entre les tensions $V_{C2}$ et $V_{Ca}$. Dans un exemple de réalisation particulier, la mesure est effectuée par le microprocesseur.

La mémorisation des valeurs des tensions mesurées s'effectue, soit de façon analogique, mais préférentiellement de façon numérique sur plusieurs bits dont le nombre dépend de la précision d'analyse souhaitée.

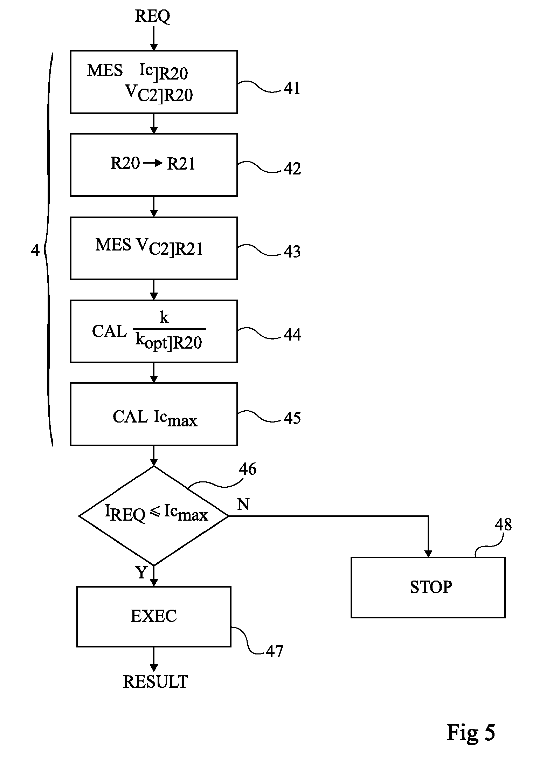

La figure 5 illustre un mode de mise en oeuvre d'une détermination de la quantité d'énergie disponible lorsqu'un transpondeur est dans une relation de couplage donnée avec un terminal. Dans l'exemple de la figure 5, on suppose que cette détermination fait suite à une requête REQ envoyée par le terminal. Pour simplifier l'exposé des figures qui suivent, on continue à se référer aux valeurs de la tension $V_{C2}$, sachant qu'il est en pratique plus facile de mesurer et d'exploiter les valeurs de la tension $V_{Ca}$ mais que cela ne change rien sur le résultat.

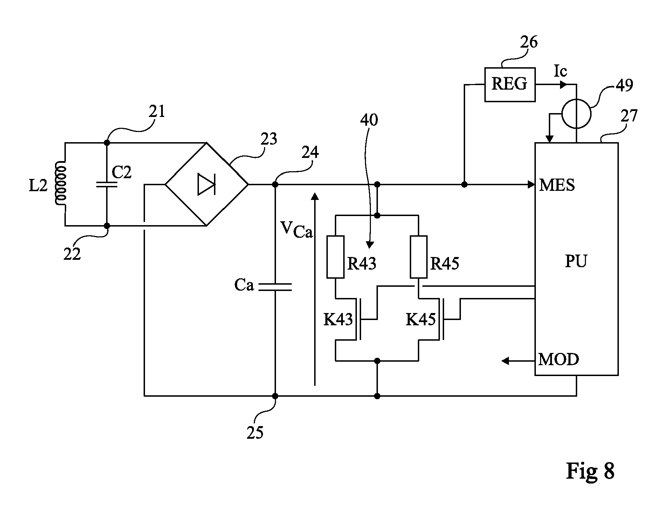

On commence (bloc 41, MES $Ic_{]R20}$, $V_{C2]R20}$) par mesurer et stocker les valeurs du courant $Ic_{]R20}$ consommé et de la tension $V_{C2]R20}$ avec la valeur R20 de la résistance R2. Cette mesure correspond, par exemple, à une mesure des conditions courantes, c'est-à-dire que la résistance R20 correspond à la charge du transpondeur lorsqu'il reçoit la requête REQ du terminal. La valeur de la résistance R20 doit cependant être connue car elle sera utilisée ultérieurement pour évaluer le couplage. Une solution pour déterminer la valeur de la résistance R20 est de calculer le rapport entre la valeur (fixe et connue) de la tension Vcc fournie par le régulateur 26 et le courant $Ic_{]R20}$ mesuré. En variante, la valeur R20 correspond à une valeur de charge résistive prédéfinie sur laquelle est commuté le transpondeur comme on le verra en relation avec la figure 8.

Puis (bloc 42, R20 -> R21), on modifie la valeur de l'élément résistif R2 vers une valeur, par exemple, supérieure.

Puis (bloc 43, $V_{C2]R21}$), on mesure la tension $V_{C2}$ avec la valeur de résistance R21 que l'on mémorise.

On calcule alors (bloc 44, CAL $k/k_{opt]R20}$) la valeur du rapport $k/k_{opt]R20}$. En fait, pour l'estimation du courant maximal possible, il suffit de calculer le carré $(k/k_{opt]R20})^2$ de ce rapport (on évite ainsi un calcul de racine carrée). Ce calcul revient à appliquer la formule 16 à partir des valeurs $V_{C2]R20}$, $V_{C2]R21}$, R20, et R21.

On utilise ce rapport pour évaluer (bloc 45, CAL $Ic_{max}$) la valeur maximale $Ic_{max}$ du courant que le transpondeur peut consommer dans la relation de couplage courante. Ce calcul revient à appliquer la formule 18 aux valeurs obtenues. La quantité optionnelle $\Delta V$ qui constitue une marge de sécurité représente, par exemple, entre 5 et 30% de la valeur de la tension Vcc nominale (sur laquelle est réglé le régulateur). En pratique, comme la valeur Vcc utilisée dans le calcul correspond à une valeur mémorisée dans le microcontrôleur 27, cette valeur mémorisée peut inclure la marge $\Delta V$. La valeur $\Delta V$ est estimée, par exemple, à partir des tolérances avec lesquelles le régulateur fournit la tension Vcc. On peut aussi tenir compte des tolérances avec lesquelles ont été estimées les consommations du transpondeur pour les différentes opérations (requêtes) à effectuer.

Dans l'exemple de la figure 5, une fois que la consommation maximale possible (avant effondrement de la tension d'alimentation) est déterminée, on vérifie si la requête du terminal est exécutable. Pour cela, on compare (bloc 46 $Ic_{REQ} \leq Ic_{max}$) le courant maximal $Ic_{max}$ au courant requis $I_{REQ}$ pour l'exécution de la requête.

Les courants nécessaires à l'exécution des différentes requêtes, opérations ou calculs doivent donc être connus du microcontrôleur. Par exemple, une zone mémoire du microcontrôleur (ou d'une autre mémoire du transpondeur) contient une table de correspondance entre les opérations et leur consommation. Les valeurs stockées peuvent, selon les applications, correspondre aux requêtes que le transpondeur est susceptible de recevoir, à l'exécution de certaines fonctions (par exemple, exécution d'un algorithme de chiffrement) ou à un niveau d'opération encore plus élémentaire (par exemple, une opération d'écriture en mémoire EEPROM). Toutefois, plus ce niveau est élémentaire, plus le microcontrôleur doit effectuer des calculs (additionner les différentes consommations) pour déterminer le courant requis pour une requête donnée.

La consommation des différentes tâches ou fonctions peut être estimée à la conception du transpondeur ou être obtenue dans une phase d'apprentissage avec un terminal quelconque.

Si les conditions de couplage sont telles que la requête est exécutable (sortie Y du bloc 46), le microcontrôleur l'exécute (bloc 47, EXEC). Le cas échéant, il fournit un résultat (RESULT) transmis au terminal en rétromodulation.

Si les conditions de couplage de permettent pas l'exécution de la requête (sortie N du bloc 46), le processus de traitement de cette requête n'est pas entamé (bloc 48, STOP).

D'autres actions peuvent être prises si le courant disponible n'est pas suffisant.

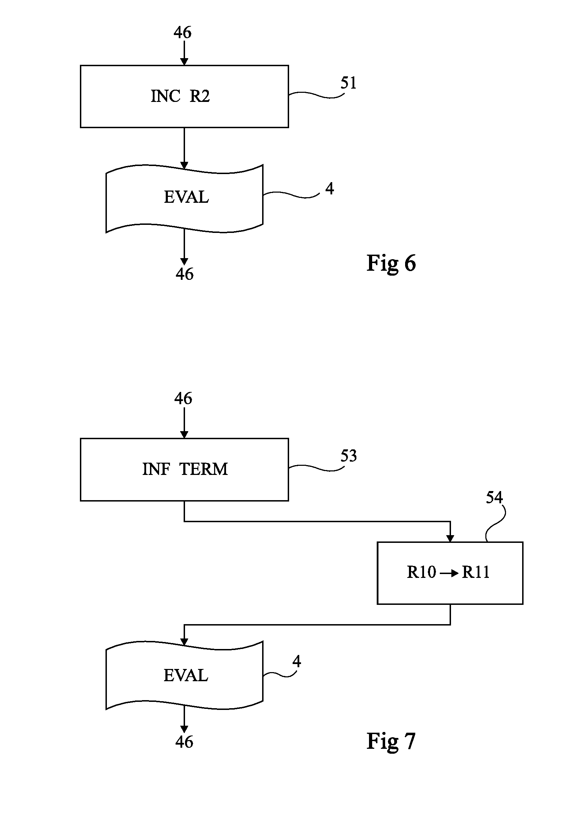

La figure 6 illustre partiellement une variante selon laquelle le transpondeur recherche une meilleure condition de fonctionnement à une position donnée.

Pour cela, le microcontrôleur provoque une augmentation de la valeur de la résistance R2 avant exécution de la requête. Cela revient à diminuer la charge, donc à augmenter la résistance équivalente R2 (bloc 51, INC R2). Puis, il vérifie qu'avec cette nouvelle condition de couplage le courant est suffisant en exécutant de nouveau le processus d'évaluation du courant $Ic_{max}$ illustré par la figure 5 (bloc 4, EVAL). Une telle adaptation peut être effectuée une ou plusieurs fois.

L'augmentation de la résistance R2 peut correspondre à une commutation de résistances mais, de préférence, il s'agit d'une diminution de la consommation du transpondeur. Par exemple, certaines fonctions accessoires sont mises en veille ou l'exécution de certaines opérations non urgentes est différée, ou encore la fréquence d'horloge est ralentie.

La figure 7 illustre partiellement une autre variante selon laquelle le transpondeur communique avec le terminal pour que ce dernier adapte la puissance du champ rayonné.

En sortie du test 46, le transpondeur transmet au terminal une information comme quoi l'énergie est insuffisante pour qu'il exécute la requête (bloc 53, INF TERM).

Lorsqu'il reçoit cette information, le terminal cherche à adapter la puissance du champ sans toutefois désaccorder les circuits oscillants. Pour la mise en oeuvre de ce mode de réalisation, le terminal est adapté à pouvoir faire varier sa résistance R1 série. Le terminal modifie (bloc 54, R10 -> R11) la valeur de sa résistance série R1 d'une valeur nominale R10 vers une valeur R11 inférieure. Ainsi, le complément de charge requis pour aller jusqu'à la consommation requise par le transpondeur est compensé par le terminal. En effet, diminuer la valeur de la résistance R1 revient à diminuer, dans le même rapport, la valeur de la résistance R2.

Selon l'exemple de la figure 7, le transpondeur évalue, avant d'envoyer l'information au terminal, l'adaptation dont il aurait besoin pour exécuter la requête. Pour estimer la valeur $R2_{REQ}$ requise de la résistance R2, on considère que la tension $V_{C2]R2REQ}$ pour la valeur $R2_{REQ}$ et le courant $I_{REQ}$ doit rester la même que la tension $V_{C2]R20}$ (la tension courante est suffisante pour obtenir la tension Vcc). Cela permet d'écrire le rapport suivant entre les valeurs $R2_{REQ}$ et R20 :

$$\frac{R10}{R11} = \frac{R20}{R2_{REQ}} = \frac{I_{REQ}}{Ic_{]R20}} \, . \qquad \text{(formule 19)}$$

Par conséquent, le transpondeur peut transmettre le rapport $I_{REQ}/Ic_{]R20}$ (ou les valeurs $I_{REQ}$ et $Ic_{]R20}$) au terminal, ce qui permet à celui-ci de faire varier la résistance R1 en conséquence.

En variante, on introduit la valeur minimale de tension $V_{C2min}$. Cela permet d'optimiser l'énergie fournie par le terminal au strict nécessaire. La formule 19 devient :

$$\frac{R10}{R11} = \frac{R2min}{R2_{REQ}} = \frac{I_{REQ}}{Ic_{max}} \, . \qquad \text{(formule 20)}$$

On peut prévoir que seule une partie des requêtes ou opérations fait l'objet d'une vérification (par exemple, les opérations cryptographiques où, pour des questions de protections des quantités secrètes manipulées, il n'est pas souhaitable que l'opération soit interrompue).

En variante, ce qui a été décrit en relation avec une requête correspond à l'exécution d'une ou plusieurs fonctions engendrées par une requête reçue d'un terminal, ce qui peut être assimilé au découpage d'une requête externe reçue d'un terminal en requêtes internes au transpondeur. Dans ce cas, pour toute requête interne "sensible", c'est-à-dire dont on souhaite s'assurer qu'elle puisse s'exécuter entièrement, le microcontrôleur vérifie le courant maximal disponible avant son exécution.

La figure 8 est un schéma-blocs d'un mode de réalisation d'un transpondeur 2, équipé pour gérer l'énergie conformément au procédé décrit. La représentation de la figure 5 est simplifiée par rapport à celle de la figure 2. En particulier, les éléments de démodulation, de rétromodulation et d'obtention de la fréquence d'horloge n'ont pas été illustrés.

Comme précédemment, le transpondeur 2 est basé sur un circuit oscillant parallèle L2-C2 dont les bornes 21 et 22 sont reliées aux bornes d'entrée d'un pont de redressement 23. En sortie du régulateur 26 est prévu un élément de mesure du courant Ic à destination de l'unité de traitement. Par ailleurs, entre les bornes 24 et 25 du pont redresseur 23, est prévu un circuit résistif commutable 40. Par exemple, deux résistances R43 et R45 sont connectées en parallèle en étant chacune en série avec un interrupteur K43, respectivement K45. Les interrupteurs K43 et K45 (par exemple, des transistors MOS) sont destinés à être commutés pour mettre en oeuvre le procédé de détermination de la position de couplage. L'unité de traitement 27 (PU) reçoit une information sur la tension $V_{Ca}$ sur une entrée MES pour mettre en oeuvre le procédé décrit ci-dessus. L'unité 27 reçoit également une information relative au courant Ic (par exemple par un capteur 49). Dans l'exemple de la figure 8, lorsque les deux résistances R43 et R45 sont fonctionnellement connectées, la résistance R2 (charge des circuits du transpondeur) représente la valeur R20. La déconnexion d'une des résistances (par exemple, la résistance R43) augmente la résistance R2 vers la valeur R21. D'autres connexions et commutations peuvent être prévues selon la variante du procédé mis en oeuvre. Par exemple, une seule résistance commutable peut être utilisée en considérant, comme cela a été décrit en relation avec la figure 5, qu'une des deux valeurs de la résistance R2 correspond à la charge résistive des autres circuits du transpondeur.

Selon un mode de réalisation préféré, la résistance commutable correspond à celle utilisée pour une rétromodulation résistive. Par exemple, on effectue une première mesure en commutant la résistance de rétromodulation pour qu'elle soit fonctionnellement dans le circuit (interrupteur K30 à l'état passant dans l'exemple de la figure 2). On mesure la tension $V_{C2]R20}$. Puis, on ouvre l'interrupteur K30 et on mesure la tension $V_{C2]R21}$.

En variante, l'augmentation ou la diminution de la résistance équivalente R2 est provoquée par une variation de la consommation des circuits du transpondeur, typiquement de l'unité de traitement 27. Par exemple, pour diminuer la valeur de la résistance R2 (augmenter la consommation), on déclenche l'exécution de calculs ou de traitement par l'unité 27. On peut également provoquer une augmentation de la résistance équivalente R2 en réduisant la consommation de l'unité 27 en interrompant certains calculs. En variante, on ralentit la vitesse d'exécution conditionnée par l'horloge (bloc 20). La variation de la résistance R2 est connue à partir du moment où la consommation de différentes tâches à exécuter par l'unité 27 est connue.

Les calculs requis pour évaluer l'énergie disponible sont suffisamment simples pour que leur temps d'exécution soit négligeable par rapport à la vitesse de déplacement d'un transpondeur devant un terminal (donc la vitesse de variation du coefficient de couplage). C'est en particulier le cas pour des transpondeurs équipés de microcontrôleurs exécutant des fonctions de cryptographie dans lesquels ces fonctions gourmandes en calculs sont elle-même exécutées dans une durée durant laquelle on peut considérer que le couplage ne varie pas. Dans d'autres cas, la transpondeur reste posé sur une surface de réception du terminal et le couplage ne varie donc pas pendant un période encore plus grande.

On notera que l'évaluation de l'énergie disponible est effectuée sans qu'il soit nécessaire d'établir une communication avec le terminal.

De plus, évaluer le couplage courant par rapport au couplage optimum tel que décrit ci-dessus permet de s'affranchir des caractéristiques d'un terminal donné et rend l'évaluation indépendante du terminal. Ainsi, un transpondeur équipé des moyens d'évaluation du couplage de l'invention peut fonctionner avec tout terminal existant.

Divers modes de réalisation avec diverses variantes ont été décrits ci-dessus. On notera en particulier, bien que dans les exemples ci-dessus, on ait fait référence à une évaluation du courant maximal disponible, on pourra exploiter directement une information sur la puissance (énergie) disponible en faisant intervenir dans les différentes relations la tension minimale requise ($V_{C2min}$) pour les circuits du transpondeur.

**Revendications**

1.  Procédé d'évaluation, par un transpondeur électromagnétique (2) dans le champ d'un terminal (1) produisant un champ magnétique, de l'énergie qu'il est susceptible d'extraire de ce champ, comportant les étapes :

    d'évaluer le couplage courant (k) entre le transpondeur (2) et le terminal (1) ; et
    d'en déduire une information ($Ic_{max}$) relative à l'énergie disponible dans cette position de couplage,
    l'évaluation du couplage courant comportant les étapes suivantes :

    mesurer et mémoriser une première information relative au niveau d'une tension continue fournie par un moyen de redressement (23) en aval d'un circuit oscillant (L2, C2) que comporte le transpondeur, pour une première valeur (R20) de charge résistive constituée par des circuits du transpondeur sur le circuit oscillant ;
    mesurer et mémoriser une seconde information relative au niveau de ladite tension continue pour une seconde valeur (R21) de charge résistive sur le circuit oscillant ; et
    en déduire une position du facteur de couplage courant (k) par rapport à une position de couplage optimum ($k_{opt]R20}$) avec une des deux valeurs (R20) de charge résistive.

2.  Procédé selon la revendication 1, dans lequel ladite une information relative à l'énergie disponible est le courant maximal ($Ic_{max}$) susceptible d'être prélevé sur les circuits du transpondeur sous une tension minimale.

3.  Procédé selon la revendication 1 ou 2, dans lequel une variation de la charge résistive (R2) entre les première et seconde valeurs (R20, R21) est obtenue en commutant un élément résistif de rétromodulation (30) que comporte le transpondeur (2).

4.  Procédé de gestion d'énergie d'un transpondeur électromagnétique (2) dans le champ d'un terminal, dans lequel :

    l'énergie disponible ($Ic_{max}$) est évaluée conformément à l'une quelconque des revendications 1 à 3 ; et
    elle est comparée à une énergie requise ($I_{REQ}$) pour l'exécution d'une fonction par le transpondeur.

5.  Procédé selon la revendication 4, dans lequel des énergies requises pour différentes fonctions sont stockées dans le transpondeur (2).

6.  Procédé selon la revendication 4 ou 5, dans lequel l'exécution de la fonction n'est entamée par le transpondeur (2) que si l'énergie disponible est suffisante.

**7.** Procédé selon l'une quelconque des revendications 4 à 6, dans lequel les fonctions exécutées par le transpondeur (2) sont adaptées en fonction de l'énergie disponible ($Ic_{max}$).

**8.** Procédé selon l'une quelconque des revendications 4 à 7, dans lequel une information relative à l'énergie requise est transmise au terminal (1) pour qu'il adapte la puissance du champ généré.

**9.** Transpondeur électromagnétique comportant :

un circuit oscillant (L2, C2) en amont d'un circuit de redressement (23) propre à fournir une tension continue ($V_{Ca}$) lorsque le transpondeur se trouve dans le champ magnétique d'un terminal (1) ; et
au moins une unité de traitement (27) adaptée à mettre en oeuvre le procédé selon l'une quelconque des revendications 1 à 8.

**10.** Transpondeur selon la revendication 9, comportant en outre au moins un élément résistif commutable (40) propre à être fonctionnellement connecté en parallèle sur le circuit oscillant.

**Patentansprüche**

**1.** Ein Verfahren zur Auswertung, durch einen elektromagnetischen Transponder (2), in dem Feld eines ein Magnetfeld erzeugenden Anschlusses (1) der Leistung, dass er aus diesem Feld herausziehen kann, wobei die folgenden Schritte vorgesehen sind:

Auswerten der Stromkoppelung (k) zwischen dem Transponder (2) und dem Anschluss (1); und
Ableiten einer Information bzw. Daten ($Ic_{max}$) relativ zu einer in dieser Koppelungsposition verfügbaren Leistung, wobei die Strom-Koppelungsauswertung folgende Schritte aufweist: Messen und Speichern einer ersten Information bzw. Daten relativ zu dem Pegel einer Gleichspannung geliefert durch ein Gleichrichtermittel (23) stromabwärts einer Oszillationsschaltung (L2, C2), die den Transponder aufweist, und zwar für einen ersten Wert (R20) der Widerstandslast gebildet durch Schaltungen des Transponders an der Oszillationsschaltung;
Messen und Speichern einer zweiten Information bzw. Daten relativ zu dem Pegel der erwähnten Gleichspannung für einen zweiten Wert (R21) der Widerstandslast an der Oszillatorschaltung; und
Ableiten einer Position des Stromkopplungsfaktors (k) bezüglich einer optimalen Kopplungsposition ($k_{opt]R20}$) mit einem der zwei Werte (R20) der Widerstandslast.

**2.** Das Verfahren nach Anspruch 1, wobei die erwähnte Information bzw. Daten relativ zur verfügbaren Leistung der maximale Strom ($Ic_{max}$) sind, der von den Transponderschaltungen unter einer minimalen Spannung abgetastet bzw. abgenommen werden kann.

**3.** Das Verfahren nach Anspruch 1 oder 2, wobei eine Variation der Widerstandslast (R2) zwischen den ersten und zweiten Werten (R20, R21) erhalten wird durch Schalten eines einen Widerstand vorsehenden Retromodulationselements (30), welches der Transponder (2) aufweist.

**4.** Ein Verfahren zum Managen der Leistung eines elektromagnetischen Transponders (2) in dem Feld eines Anschlusses, wobei folgendes vorgesehen ist:

die verfügbare Leistung ($Ic_{max}$) wird gemäß irgendeinem der Ansprüche 1 bis 3 geschätzt; und
sie wird verglichen mit der Leistung ($I_{REQ}$), die für die Ausführung einer Funktion durch den Transponder erforderlich ist.

**5.** Das Verfahren nach Anspruch 4, wobei die für unterschiedliche Funktionen erforderlichen Leistungen in dem Transponder (2) gespeichert werden.

**6.** Das Verfahren nach Anspruch 4 oder 5, wobei die Ausführung der Funktion nur durch den Transponder (2) gestartet wird, wenn die verfügbare Leistung hinreichend ist.

**7.** Das Verfahren nach einem der Ansprüche 4 bis 6, wobei die durch den Transponder (2) ausgeführten Funktionen entsprechend der verfügbaren Leistung ($Ic_{max}$) angepasst sind.

8. Das Verfahren nach einem der Ansprüche 4 bis 7, wobei Daten bzw. Information relativ zur erforderlichen Leistung zu dem Anschluss (1) übertragen werden, damit dieser sich an die Leistung des erzeugten Feldes anpasst.

9. Ein elektromagnetischer Transponder, der folgendes aufweist:

eine Oszillationsschaltung (L2, C2) stromaufwärts gegenüber einer Gleichrichtungsschaltung (23), die in der Lage ist eine Gleichspannung ($V_{Ca}$) zu erzeugen, wenn der Transponder in dem Magnetfeld eines Anschlusses (1) anwesend ist; und
mindestens eine Verarbeitungseinheit (27), die in der Lage ist, das Verfahren nach einem der Ansprüche 1 bis 8 zu implementieren.

10. Der Transponder nach Anspruch 9, der ferner mindestens ein schaltbares Widerstandselement (40) aufweist, welches in der Lage ist, funktionsmäßig parallel mit der Oszillationsschaltung verbunden zu werden.

**Claims**

1. A method of evaluation, by an electromagnetic transponder (2) in the field of a terminal (1) generating a magnetic field, of the power that it can extract from this field, comprising the steps of:

evaluating the current coupling (k) between the transponder (2) and the terminal (1); and
deducing therefrom data ($Ic_{max}$) relative to the power available in this coupling position,
measuring and storing first data relative to the level of a D.C. voltage provided by a rectifying means (23) downstream an oscillating circuit (L2, C2) comprised in the transducer, for a first value (R20) of the resistive load formed by circuits of the transponder on the oscillating circuit;
measuring and storing second data relative to the level of said D.C. voltage for a second value (R21) of the resistive load on the oscillating circuit; and
deducing a position of the current coupling factor (k) with respect to an optimum coupling position ($k_{opt]R20}$) with one of the two values (R20) of the resistive load.

2. The method of claim 1, wherein said data relative to the available power are the maximum current ($Ic_{max}$) that can be sampled from the transponder circuits under a minimum voltage.

3. The method of claim 1 or 2, wherein a variation of the resistive load (R2) between the first and second values (R20, R21) is obtained by switching a resistive retromodulation element (30) comprised by the transponder (2).

4. A method for managing the power of an electromagnetic transponder (2) in the field of a terminal, wherein:

the available power ($Ic_{max}$) is estimated according to any of claims 1 to 3; and
it is compared with the power ($I_{REQ}$) required for the execution of a function by the transponder.

5. The method of claim 4, wherein powers required for different functions are stored in the transponder (2).

6. The method of claim 4 or 5, wherein the execution of the function is only started by the transponder (2) if the available power is sufficient.

7. The method of any of claims 4 to 6, wherein the functions executed by the transponder (2) are adapted according to the available power ($Ic_{max}$).

8. The method of any of claims 4 to 7, wherein data relative to the required power are transmitted to the terminal (1) to have it adapt the power of the generated field.

9. An electromagnetic transponder comprising:

an oscillating circuit (L2, C2) upstream of a rectifying circuit (23) capable of providing a D.C. voltage ($V_{Ca}$) when the transponder is present in the magnetic field of a terminal (1); and

at least one processing unit (27) capable of implementing the method of any of claims 1 to 8.

10. The transponder of claim 9, further comprising at least one switchable resistive element (40) capable of being functionally connected in parallel on the oscillating circuit.

Fig 1

Fig 3

Fig 2

Fig 4

REQ

$\downarrow$

| MES $Ic]R20$ $V_{C2]R20}$ | 41 |

$\downarrow$

| $R20 \rightarrow R21$ | 42 |

$\downarrow$

| MES $V_{C2]R21}$ | 43 |

$\downarrow$

| CAL $\dfrac{k}{k_{opt]R20}}$ | 44 |

$\downarrow$

| CAL $Ic_{max}$ | 45 |

4

$\downarrow$

46

$I_{REQ} \leqslant Ic_{max}$ — N → 48 STOP

Y

$\downarrow$

| EXEC | 47 |

$\downarrow$

RESULT

**Fig 5**

46

INC  R2 — 51

EVAL — 4

46

**Fig 6**

46

INF  TERM — 53

54

R10 → R11

EVAL — 4

46

**Fig 7**

Fig 8

**EP 2 267 644 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005001609 A
- US 20080136643 A
- EP 0857981 A